Europäisches Patentamt

European Patent Office

Office européen des brevets

(11) Veröffentlichungsnummer: **0 179 354**
**B1**

## (12) EUROPÄISCHE PATENTSCHRIFT

(45) Veröffentlichungstag der Patentschrift:
**13.01.88**

(21) Anmeldenummer: **85112904.1**

(22) Anmeldetag: **09.10.85**

(51) Int. Cl.⁴: **B 65 G 53/52,** F 16 L 55/24

(54) **Rohrleitung für die pneumatische Horizontalförderung von Schüttgut.**

(30) Priorität: **11.10.84 DE 3437352**

(43) Veröffentlichungstag der Anmeldung:
**30.04.86 Patentblatt 86/18**

(45) Bekanntmachung des Hinweises auf die Patenterteilung:
**13.01.88 Patentblatt 88/2**

(84) Benannte Vertragsstaaten:
**DE FR GB IT**

(56) Entgegenhaltungen:
**EP-A-0 145 134**

(73) Patentinhaber: **CLAUDIUS PETERS
AKTIENGESELLSCHAFT, Kapstadtring 1, D-2000
Hamburg 60 (DE)**

(72) Erfinder: **Hilgraf, Peter, Dipl.- Ing., Poggfreedweg
45, D-2000 Hamburg 73 (DE)**
Erfinder: **Vogt, Heinrich, Dipl.- Ing., Inne Beek 9,
D-2150 Buxtehude (DE)**

(74) Vertreter: **Glawe, Delfs, Moll & Partner
Patentanwälte, Postfach 26 01 62 Liebherrstrasse
20, D-8000 München 26 (DE)**

EP 0 179 354 B1

## Beschreibung

Die Erfindung bezieht sich auf eine Rohrleitung für die pneumatische Förderung von Schüttgut mit horizontaler Richtungskomponente, die in ihrem Förderquerschnitt eine wendelförmige Leitfläche zum Anheben des sich im unteren Leitungsquerschnitt sammelnden Schüttguts und zum Fallenlassen desselben in den fördernden Gasstrom enthält.

Pneumatische Horizontalförderung im Sinne der Erfindung ist die Rohrförderung, bei welcher den zu fördernden Partikeln der Förderimpuls von einem das Fördermedium bildenden Gasstrom übertragen wird, in welchem die Partikeln mehr oder weniger in der Schwebe gehalten sind. Die Übertragung des Förderimpulses ist denn am leichtesten, wenn die Partikeln in der sogenannten Flugförderung gleichmäßig über den Förderleitungsquerschnitt im Fördermedium verteilt sind. Da aber Voraussetzung für die Flugförderung eine geringe Dichte des Feststoffs im Fördermedium ist, sind die Förderenergiekosten hoch. Man strebt daher eine größere Fördergutdichte an, die aber den Nachteil hat, daß bei Überschreitung eines bestimmten Grenzwerts der über den Grenzwert hinausgehende Feststoffanteil aus dem Gasstrom ausfällt und eine sogenannte Strähne bildet, die bei der Horizontalförderung auf der vom Rohrboden gebildeten Auflagefläche aufliegt und je nach dem Grad ihrer Entlüftung der Förderung in der Art einer viskosen Flüssigkeit Widerstand entgegensetzt. Der Förderquerschnitt enthält denn im oberen Bereich eine weniger dichte Phase des Gas/Faststoff-Gemisches mit Flugfördereigenschaften und im unteren eine dichtere und träge Phase.

Um das in der dichteren Phase enthaltene Schüttgut im Fördermedium wieder zu verteilen, hat man eine schraubenförmig am Innenumfang der Rohrleitung unendlich umlaufenden, wendelförmige Leitfläche vorgeschlagen (DE-A-14 56 964), die als von der Rohrwand wenig vorstehende Rippe ausgebildet ist. Man erhofft sich davon, daß das Fördermedium die am Boden der Rohrleitung sich sammelnden Feststoffpartikeln entlang der Rippe vorwärts und damit auf aufwärts treibt, so daß sie angehoben und aus dem oberen Bereich des Rohrleitungsquerschnitts wieder abgeworfen werden und auf diese Weise in den Hauptmediumsstrom zurückgelangen. Dies mag bei relativ kleinem Unterschied der spezifiechen Gewichte zwischen Fördermedium und Feststoffen möglich sein, wenn es sich um eine Erdöl-Pipeline handelt, in welcher das Fördermedium Öl und der Feststoff von Kohlenwasserstoffen und dergleichen gebildet ist deren Dichte nicht wesentlich höher als die des Öls ist. Bei der pneumatischen Förderung versagt jedoch dieses Konzept; es hat sich gezeigt, daß die Feststoffe im unteren Rohrleitungsquerschnitt verbleiben und sich hinter den Rippen ablagern, während die Rippen, soweit sie im oberen Rohrleitungsbereich umlaufen, lediglich unnötige Druckverluste verursachen.

Ferner ist es bekannt (DE-A-14 56 802, DE-B-11 52 951, DE-A-28 09 005, DE-B-11 43 754), innerhalb der Rohrleitung Rampen anzuordnen, die über einem von dem Fördermedium durchströmten Freiraum eine Abwurfkante bilden. Soweit der Freiraum unter einer im wesentlichen horizontalen Rampe durch Ausbildung einer Vertiefung gewonnen wird, hat sich gezeigt, daß sich der Feststoff in dieser Vertiefung absetzt, wodurch die Wirkung der Vertiefung zunichte gemacht wird und die Abwurfkante allmählich verschwindet. Soweit die Rampe ansteigend angeordnet ist, bildet sich dahinter im Strömungsschatten ein beruhigter Raum, in welchem es gleichfalls zur Ablagerung von Schüttgut und damit zur Veränderung gerade derjenigen Formcharakteristiken kommt, die für die Verteilung des Schüttguts sorgen sollen.

Die zum stand der Technik gemäß Artikel 54(3) EPÜ gehödrende EP-A-145 134 betrifft ein System zum Mischen von fließfähigen Stoffen innerhalb einer Rohrleitung mittels Einbauten, die die Stoffe während des Durchgangs aufrühren und kneten. Eine Ausführung dieses Systems besteht aus einer Folge von wendelförmigen Leitflächen, die sich jeweils über eine Halbwendel erstrecken und von denen mindestens zwei vorhanden sein müssen. Eine bestimmte Anordnung der Anfangs- und Endkanten der Leitflächen gegenüber der Horizontalrichtung ist nicht offenbart.

Der Erfindung liegt die Aufgabe zugrunde, für eine pneumatische Förderleitung ein Einbauelement zu schaffen, das für eine wirksame Rückführung der dichteren Phase des Gas/Feststoff-Gemischs in den Förderstrom sorgt.

Ausgehend von dem an erster Stelle genannten Stand der Technik besteht für den Bestimmungsstaat Italien die erfindungsgemäße Lösung darin, daß die im Querschnitt sich über im wesentlichen die gesamte lichte Weite der Förderleitung erstreckende und darin zwei durchgehend offene Teilquerschnitte voneinander trennende Leitfläche stromabwärts nach einer Halbwendel in einer etwa horizontalen Kante endet.

Für die Bestimmungsstaaten DE, FR und GB ist diese Lösung durch das Merkmal abgegrenzt, daß die Leitfläche stromabwärts in einer etwa horizontalen Kante endet. Überdies wird für diese Staaten eine weitere Abgrenzung durch das zusätzliche Merkmal bewirkt, daß sie - im Gegensatz zu der bekannten Folge gleichartiger Elemente - einzeln anzuordnen ist.

Im Gegensatz zu der eingangs beschriebenen, bekannten Wendel ist die erfindungsgemäße Leitfläche nicht endlos, sondern beschränkt sich in ihrer Länge auf eine Halbwendel. Außerdem erstreckt sie sich über den gesamten Querschnitt, beispielsweise in der Art eines Durchmessers, um zwei vollständig offene Teilquerschnitte im wesentlichen vollständig voneinander zu trennen.

Derjenige Teilquerschnitt, der an ihrem stromabwärts liegenden Ende oben ist, befindet sich an ihrem stromaufwärts liegenden Ende unten. Mit anderen Worten teilt die erfindungsgemäße Leitfläche die dichtere und die weniger dichte Strömungsphase an ihrem stromaufwärts liegenden Ende auf die von ihr getrennten unteren und oberen Teilquerschnitte auf, wendet sie um 180° und führt sie an ihrem stromabwärts liegenden Ende wieder zusammen, wobei der Teilquerschnitt, der die dichtere Phase enthält, oben liegt. Diese Umschichtung der Phasen vollzieht sich, ohne daß sich in irgendeinem Bereich der Leitfläche ein Strömungsschatten bildet, in welchem sich das Schüttgut ansammeln könnte. Vielmehr bleibt der Strömungsquerschnitt insgesamt unverändert, und beide Strömungsquerschnitte werden in ihrer Gesamtheit mehr oder weniger gleichmäßig von der ihnen zugeordneten Phase durchströmt. Die Vermeidung von Ablagerungen verhütet Querschnittsverengungen und Energieverluste und sorgt für gleichbleibende Wirksamkeit. Dabei ist der Investitionsaufwand gering; weil keinerlei Änderungen an der Rohrleitung selbst erforderlich sind und die Leitfläche selbst als um sich selbst gedrehtes Flachmaterial leicht herstellbar und montierbar ist.

Die horizontale Anordnung der stromabwärts gelegenen Endkante der Leitfläche soll gewährleisten, daß das zuvor im unteren Rohrleitungsquerschnitt befindliche, dichtere Gut hinreichend angehoben wird und über eine möglichst große Breite abgeworfen wird. Abweichungen von der genauen Horizontalrichtung sind im Rahmen dieser Ziele möglich. - Für die Wirkung der erfindungsgemäßen Leitfläche kommt es auf einen mathematisch genauen Begriff der Halbwendel nicht an; gewährleistet werden soll vielmehr, daß die durch die stromaufwärts gelegene Endkante der Leitfläche getrennten Teilquerschnitte die in ihrer Lage umzukehrenden Teilphasen des Förderguts hinreichend erfassen. Für diesen Zweck ist eine horizontale Anordnung der stromaufwärts liegenden Endkante der Leitfläche im allgemeinen vorteilhaft.

Zumindest an einer Seitenkante der Leitfläche soll diese an die Rohrleitungswand anschließen, nämlich an derjenigen Seitenkante, die im Verlaufe der Wendel durch die untere Rohrleitungshälfte verläuft. Zweckmäßigerweise schließt aber auch die andere Seitenkante der Leitfläche dicht an die Rohrwandung an.

Es ist zweckmäßig, die Größe der Teilquerschnitte so aufeinander abzustimmen, daß für die Förderung und Anhebung der dichteren Phase im Bereich der Leitfläche eine hinreichende Druckdifferenz zur Verfügung steht, die durch den Druckabfall in dem für die weniger dichte Phase bestimmten Querschnittsbereich begründet wird, der zu diesem Zweck über seine ganze Länge oder nur stellenweise entsprechend verengt sein kann, wobei die Verengung zum Zwecke der Anpassung an unterschiedliche Gut- und Förderverhältnisse gegebenenfalls verstellbar sein kann.

Um zu verhüten, daß ein durch die Leitfläche hervorgerufener Drall die Separation von Gas und Feststoff infolge von Zentrifugalwirkung fördert, kann nach der Erfindung vorgesehen sein, daß dem wendelförmigen Teil der Leitfläche ein ungewendelter oder in Gegenrichtung gewendelter, drallvermindernder Leitflächenteil folgt. Zweckmäßigerweise liegt dieser vor der dem Abwurf der dichteren Phase dienenden Endkante der Leitfläche; jedoch kann er dieser Kante auch folgen.

Zur Anpassung der Größenverhältnisse der für die Dichte bzw. weniger dichte Phase vorgesehenen Querschnittsteile im Bereich der Leitfläche kann vorgesehen sein, daß die stromaufwärts gelegene Kante der Leitfläche verstellbar ist.

Um die Förderung der dichteren Phase auf der Leitfläche zu erleichtern, können darin Durchtrittsöffnungen für darunter geleitetes Fördergas vorgesehen sein.

Die Erfindung wird im folgenden näher unter Bezugnahme auf die Zeichnungen erläutert, die vorteilhafte Ausführungsbeispiele veranschaulichen. Darin zeigen:

Fig. 1 Einen vertikalen Längsschnitt durch eine erste Ausführungsform,

Fig. 2 bis 4 Querschnitte längs den Linien II, III und IV der Figur 1,

Fig. 5 bis 8 Ausführungen mit an die Wendel sich anschließender Auflagefläche,

Fig. 9 eine Ausführung mit vor der Wendel angeordneter verstellbarer Fläche und

Fig. 10 eine Ausführung mit am Eingangsquerschnitt der Wendel im oberen Bereich vorgesehenem Stellschieber.

In dem Förderrohr 1, das horizontal oder in ansteigender oder fallender Richtung mit horizontaler Komponente verlegt ist, wird mit bekannten Mitteln ein Gemisch aus einem gasförmigen Fördermedium und einem Feststoff-Schüttgut durch Differenzdruck gefördert. Wenn die Gasgeschwindigkeit so gering bzw. die Beladung mit dem Fördergut so hoch ist, daß sich keine reine Flugförderung einstellen kann, bilden sich Phasen des Förderstroms im Förderquerschnitt, von denen sich eine weniger dichte Phase mit Flugfördereigenschaften und hoher Fördergeschwindigkeit im oberen Bereich des Förderquerschnitts befindet, während eine Phase mit hoher Dichte sich im unteren Teil des Förderquerschnitts befindet, in welcher sich das Fördergut je nach seinem Lufthaltevermögen in einem mehr oder weniger aufgelockerten Zustand befindet, der im allgemeinen dem einer Flüssigkeit ähnlich ist, deren Viskosität wesentlich höher ist als diejenige der im oberen Bereich des Förderquerschnitts befindlichen, weniger dichten Phase. Dabei kann sich eine deutliche Phasengrenzschicht bilden, auf die es für die Erfindung jedoch nicht ankommt, da diese auch in denjenigen Fällen anwendbar ist, in denen ohne klare Phasentrennung sich im unteren Förderquerschnittsbereich eine größere Dichte des Gemisches als im oberen einstellt.

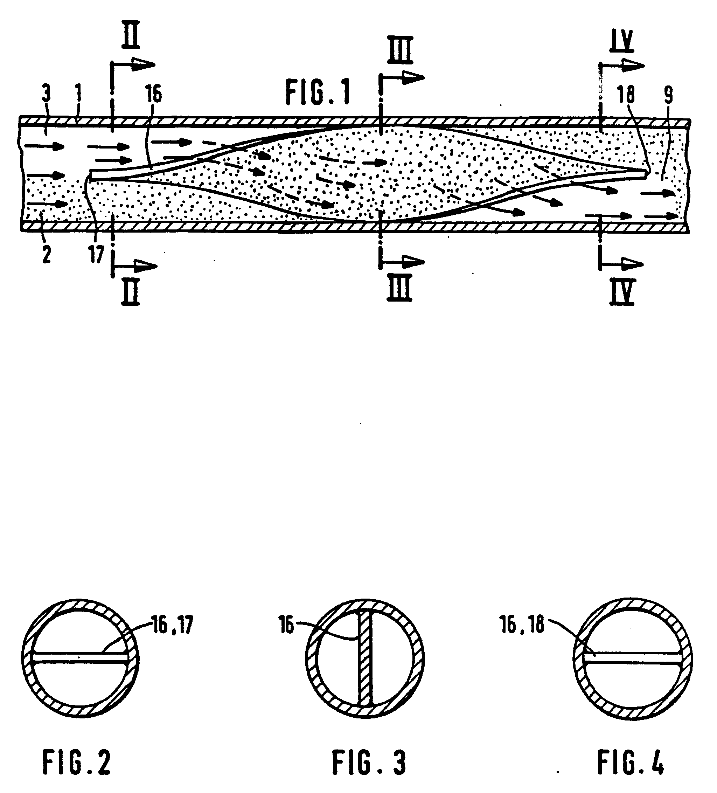

In Figur 1 ist im unteren Bereich 2 des Förderquerschnitts der Rohrleitung 1 durch Punktierung eine Phase größerer Dichte als im oberen Bereich 3 des Förderquerschnitts dargestellt. Um die durch die Phasentrennung bewirkte Verschlechterung der Förderverhältnisse aufzuheben oder zu mindern, ist über die Länge der Förderstrecke eine Mehrzahl derjenigen Einrichtungen vorgesehen, von denen eine in Fig. 1 dargestellt ist. Sie besteht aus einem um 180° gewendelten Flachmaterialband, dessen Breite dem Innendurchmesser der Rohrleitung gleicht und das so eingesetzt ist, daß es an jeder Stelle den Rohrleitungsquerschnitt in der Art eines Durchmessers in zwei gleiche Teilquerschnitte auftrennt. Jedoch kann auch vorgesehen sein, daß diese Leitfläche außermittig angeordnet ist und daß demzufolge die von ihr getrennten Teilquerschnitte unterschiedliche Größe besitzen. Ihre Anfangskante 17 an ihrem stromaufwärts liegenden Ende ist horizontal quer zur Förderleitung 1 angeordnet. Dadurch trennt diese Kante die im oberen Bereich 3 befindliche weniger dichte Phase von der im unteren Bereich 2 befindlichen dichteren Phase. Es kommt in diesem Zusammenhang nicht darauf an, daß die Anfangskante 17 räumlich mit der Phasengrenze übereinstimmt. In manchen Fällen kann es vorteilhaft sein, wenn sie erheblich über der Phasengrenze liegt, damit ein beträchtlicher Teil des Fördergases mit in den unteren Querschnittsbereich eintritt, um eine Förderwirkung auf die dichtere Phase ausüben zu können. In anderen Fällen, in denen die dichtere Phase stark lufthaltig und daher leicht beweglich ist, kann es auch zweckmäßig sein, wenn davon ein Teil in den oberen Querschnittsbereich geführt wird, ohne daß dadurch die durch die Erfindung angestrebte Verteilungswirkung beeinträchtigt wird.

Die stromabwärts gelegene Endkante 18 der Leitfläche ist in diesem Ausführungsbeispiel ebenfalls horizontal angeordnet. Der Wendelwinkel beträgt demnach 180°. Im Leitflächenbereich wird der Querschnittsteil, der am stromaufwärts liegenden Ende unten war, nach oben gedreht und umgekehrt. Daher gelangt das dichtere Fördergutgemisch, wie durch Punktierung in Fig. 1 erkennbar, über die Gasphase und fällt daher hinter der als Abwurfkante wirkenden Endkante 18 der Leitfläche nach unten in die Gasphase und wird von dieser aus dem Fallbereich 9 mitgeführt.

Damit die Steigung für das dichtere Fördergutgemisch innerhalb der Leitfläche nicht zu groß wird und auch die von ihr verursachte Drallwirkung begrenzt bleibt, die andernfalls durch Zentrifugalwirkung im anschließenden Rohrbereich die Entmischung fördern könnte, soll die Länge der Wendel ein gewisses Mindestmaß nicht unterschreiten, das in der Größenordnung von 2, besser noch 3 bis 4, Rohrdurchmessern liegt. Besonders bewährt hat sich eine Länge von 5 Rohrdurchmessern. Eine größere Länge als 8 bis 10 Rohrdurchmesser ist nicht erforderlich.

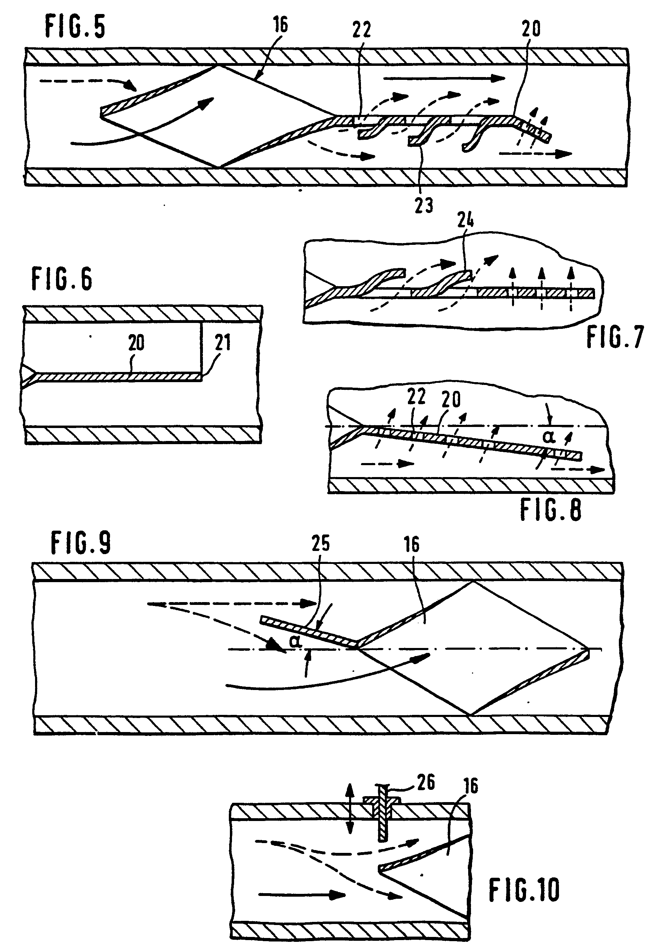

Zur Verminderung des Dralls kann sich an die Wendel 16 gemäß Fig. 6 ein Gleichrichter 20 anschließen, der von einem nicht oder gegensinnig gewendelten Abschnitt des die Leitfläche bildenden Flachmaterialstreifens gebildet ist. In dieser Ausführung wird die Abwurfkante von der Endkante 21 dieses Gleichrichters gebildet.

Gemäß Fig. 5 kann der Gleichrichter 20 Durchbrechungen 22 enthalten, die vorzugsweise mit Gasleitblechen 23 verbunden sind zur Führung von Gas aus dem dort unten befindlichen Förderquerschnittsbereich nach oben. Dadurch wird das auf dem Gleichrichter liegende, dichtere Fördergut aufgelockert und der Durchmischungseffekt verbessert. Jede in Strömungsrichtung hinten liegende Kante einer Durchbrechung 22 bildet im Sinne der Erfindung eine Abwurfkante.

Während der Gleichrichter 20 in der Ausführung gemäß Fig. 5 horizontal verläuft und die Leitbleche 23 darunter angeordnet sind, ist in der Ausführung gemäß Fig. 7 vorgesehen, daß die Gasleitbleche 24 oberhalb der Hauptebene des Gleichrichters 20 liegen. Der Wirkungsmechanismus ist derselbe. Das gilt auch für die Ausführung gemäß Fig. 8, in welcher der Gleichrichter 20 fallend angeordnet ist, so daß das Gas durch die Verengung des unteren Querschnitts zur Strömung durch die Durchbrechungen 22 veranlaßt wird.

Die Anordnung von Durchbrechungen 22 ist nicht an die Ausführung des sie enthaltenden Teils als Gleichrichter gebunden; vielmehr kann der Teil 20 in den Fig. 5, 7 und 8 auch der sich der horizontalen Lage nähernde Schlußabschnitt der Wendel selbst sein.

In der Ausführungsvariante gemäß Fig. 9 ist dem gewendelten Teil der Leitfläche ein Leitblech 25 vorgeschaltet, das die Aufteilung des Förderstroms auf die von der Wendel getrennten Teilquerschnitte der Rohrleitung beeinflußt. Dies kann auch verstellbar sein zur Anpassung an unterschiedliche Förderverhältnisse. Im dargestellten Fall wird durch das Leitblech 25 ein größerer Teil des Fördergases in den anfangs unteren Wendelbereich gelenkt, um dort eine stärkere Förderwirkung auf das dichtere Gemisch ausüben zu können.

In der Ausführungsvariante gemäß Fig. 10 wird diese Querschnittsbeeinflussung durch einen verstellbaren Schieber 26 bewirkt.

Die unter Bezugnahme auf die Fig. 5 bis 10 beschriebenen Ausführungen vor und hinter der eigentlichen Wendel können einzeln oder in Kombination eingesetzt werden.

### Beispiel:

Eine Förderstrecke von 152 m Länge, 6 m Höhenänderung und mit 6 Bögen von je 90° Umlenkungswinkel besitzt einen Rohrinnendurchmesser von 82,5 mm. Mit Luft als Fördergas wurde bei einem Gesamtluftverbrauch von 3,7 m³/min, einem Druck am Förderleitungsanfang von 3,0 bar (abs) und einem Druck am Förderleitungsende von 1,0 bar (abs) Flugasche mit einem mittleren Partikeldurchmesser (bei 50 % Rückstand) von 0,017 mm und einer Schüttdichte von 1.000 kg/m³ gefördert. Die Entlüftungszeit betrug 214 s (200 mm hohe Schüttung, die mit 4 m/min belüftet wurde).

Durch die erfindungsgemäße Ausführung der Strecke konnte bei etwa gleichem Gasverbrauch der Feststoffdurchsatz von 21 t/h auf 35 t/h erhöht werden. Dies entspricht einer Steigerung um 70 %.

**Patentanspruch** für die Vertragsstaaten DE, FR, GB

1. Rohrleitung für die pneumatische Förderung von Schüttgut mit horizontaler Richtungskomponente, die in ihrem Förderquerschnitt eine einzelne wendelförmige Leitfläche (16) zum Anheben des sich im unteren Leitungsquerschnitt (2) sammelnden Schüttguts und zum Fallenlassen desselben in den fördernden Gasstrom (3) enthält, wobei die im Querschnitt sich über im wesentlichen die gesamte lichte Weite der Förderleitung (1) erstreckende und darin zwei durchgehend offene Teilquerschnitte voneinander trennende Leitfläche (16) stromabwärts nach einer Halbwendel in einer etwa horizontalen Kante (18) endet.

**Patentanspruch** für den Vertragsstaat IT

1. Rohrleitung für die pneumatische Förderung von Schüttgut mit horizontaler Richtungskomponente, die in ihrem Förderquerschnitt eine wendelförmige Leitfläche (16) zum Anheben des sich im unteren Leitungsquerschnitt (2) sammelnden Schüttguts und zum Fallenlassen desselben in den fördernden Gasstrom (3) enthält, dadurch gekennzeichnet, daß die im Querschnitt sich über im wesentlichen die gesamte lichte Weite der Förderleitung (1) erstreckende und darin zwei durchgehend offene Teilquerschnitte voneinander trennende Leitfläche (16) stromabwärts nach einer Halbwendel in einer etwa horizontalen Kante (18) endet.

**Patentansprüche** für alle Vertragsstaaten

2. Rohrleitung nach Anspruch 1, dadurch gekennzeichnet, daß auch die stromaufwärts liegende Kante (17) der Leitfläche (16) sich etwa horizontal in Querrichtung erstreckt.

3. Rohrleitung nach Anspruch 1 oder 2, dadurch gekennzeichnet, daß zumindest eine Seitenkante der Leitfläche (16) an die Rohrleitungswand anschließt.

4. Rohrleitung nach Anspruch 3, dadurch gekennzeichnet, daß auch die andere Seitenkante der Leitfläche (16) an die Rohrwand anschließt.

5. Rohrleitung nach einem der Ansprüche 1 bis 4, dadurch gekennzeichnet, daß in dem am stromaufwärtigen Ende oben angeordneten Querschnittsteil im Vergleich mit dem anderen Querschnittsteil eine Querschnittsverengung (25, 26) vorgesehen ist.

6. Rohrleitung nach Anspruch 5, dadurch gekennzeichnet, daß die Querschnittsverengung (25, 26) verstellbar ist.

7. Rohrleitung nach einem der Ansprüche 1 bis 6, dadurch gekennzeichnet, daß dem gewendelten Teil der Leitfläche (16) ein ungewendelter oder in Gegenrichtung gewendelter, drallvermindernder Flächenteil (20) folgt.

8. Rohrleitung nach einem der Ansprüche 1 bis 7, dadurch gekennzeichnet, daß die stromaufwärts liegende Kante der Leitfläche (25) verstellbar ist.

9. Rohrleitung nach einem der Ansprüche 1 bis 8, dadurch gekennzeichnet, daß die Leitfläche (16, 20) Durchtrittsöffnungen (22) für das Fördergas aufweist.

**Claim** for the Contracting States: DE, FR, GB

1. A conduit for the pneumatic conveyance of bulk material with a horizontal directional component, which in its conveying cross-section contains a single coil guide surface (16) for raising bulk material collecting in the lower conduit cross-section (2) and for lowering it into the conveying gas flow (3), wherein the guide surface (16), which in cross-section extends over substantially the entire inside width of the conveying conduit (1) and therein separates two continuously open cross-sectional portions from one another, terminates downstream after a half turn in an approximately horizontal edge (18).

**Claim** for the Contracting State: IT

1. A conduit for the pneumatic conveyance of bulk material with a horizontal directional component, which in its conveying cross-section contains a coil guide surface (16) for raising bulk material collecting in the lower conduit cross-section (2) and for lowering it into the conveying gas flew (3), characterized in that the guide surface (16), which in cross-section extends over substantially the entire inside width of the conveying conduit (1) and therein sepatates two continuously open cross-sectional portions from one another, terminates downstream after a half turn in an approximately horizontal edge (18).

**Claims** 2 to 9 for all Contracting States :

2. A conduit according to claim 1, characterised in that the upstream edge (17) of the guide surface (16) extends approximately hoizontally in the transverse direction.

3. A conduit according to claim 1 or 2, characterised in that at least one lateral edge of the guide surface (16) adjoins the conduit wall.

4. A connduit according to claim 3, characterised in that the other lateral edge of the guide surface (16) also adjoins the conduit wall.

5. A conduit according to any one of claims 1 to 4, characterised in that the upper part of the upstream open cross-section portion there is provided a reduction in cross-section (25, 26), compared to the other open cross-section portion.

6. A conduit according to claim 5, characterised in that the reduction in cross-section (25, 26) is variable.

7. A conduit according to any of claims 1 to 6, characterised in that a spin-reducinng surface portion (20), which is not coiled or is coiled in the opposite direction, follows the coiled portion of the guide surface (16).

8. A conduit according to any one of claims 1 to 7, chacterised in that the upstream edge of the guide surface (25) is adjustable.

9. A conduit according to any one of claims 1 to 8, chacterised in that the guide surface (16, 20) has openings (22) for the passage of conveying gas.

**Revendication** pour les Etats contractants: DE, FR, GB

1. Conduite pour le transport pneumatique de matériaux en vrac à composante directionnelle horizontale, comprenant dans sa section de transport une surface directrice unique de forme hélicoïdale pour faire monter le matériau en vrac s'accumulant à la partie inférieure de la section transversale (2) de la conduite et pour le laisser retomber dans le flux de gaz porteur (3), dans laquelle la surface directrice (16), qui s'étend, en coupe transversale, essentiellement sur tout le diamètre intérieur de la conduite de transport (1) et qui sépare l'une de l'autre deux sections partielles ouvertes de bout en bout dans ladite conduite, se termine en aval, après une demi-hélice, en un bord à peu près horizontal (18).

**Revendication** pour l'Etat contractant: IT

1. Conduite pour le transport pneumatique de matériaux en vrac à composante directionnelle horizontale, comprenant dans sa section de transport une surface directrice de forme hélicoïdale (16) pour faire monter le matériau en vrac s'accumulant à la partie inférieure de la section transversale (2) de la conduite et pour le laisser retomber dans le flux de gaz parteur (3), caractérisée en ce que la surface directrice (16), qui s'étend, en coupe transversale, essentiellement sur tout le diemètre intérieur de la canduite de transport (1) et qui sépare l'une de l'autre deux sections partielles ouvertes de bout en bout dans ladite conduite, se termine en aval, après une demi-hélice, en un bord à peu près horizontal (18).

**Revendications** pour tous les Etats contractants.

2. Conduite selon la revendication 1, caractérisée en ce que le bord (17) situé en amont de la surface directrice (16) s'étend à peu près horizontalement dans le sens transversal.

3. Conduite selon la revendication 1 ou 2, caractérisée en ce qu'un bord latéral au moins de la surface directrice (16) se raccorde à la paroi de la conduite.

4. Conduite selon la revendication 3, caractérisée en ce que l'autre bord latéral de la surface directrice (16) se raccorde aussi à la paroi de la conduite.

5. Conduite selon l'une quelconque des revendications 1 à 4, caractérisée en ce qu'un dispositif d'étranglement (25, 26) est prévu dans la partie supérieure de la section disposée à l'extrémité amont, pour rétrécir la section par rapport à l'autre partie de la section.

6. Conduite selon la revendication 5, caractérisée en ce que le dispositif d'étranglement (25, 26) est réglable.

7. Conduite selon l'une quelconque des revendications 1 à 6, caractérisée en ce qu'une partie de surface (20) non hélicoïdale ou hélicoïdale de sens opposé, atténuant la torsion, fait suite à la partie hélicoïdale de la surface directrice (16).

8. Conduite selon l'une quelconque des revendications 1 à 7, caractérisée en ce que le bord amont de la surface directrice (25) est réglable.

9. Conduite selon l'une quelconque des revendications 1 à 8, caractérisée en ce que la surface directrice (16, 20) comprend des ouvertures de passage (22) pour le gaz de transport.

FIG. 1

FIG. 2

FIG. 3

FIG. 4

1

FIG.5

FIG.6

FIG.7

FIG.8

FIG.9

FIG.10